# EUROPÄISCHE PATENTSCHRIFT

(11) **EP 1 007 327 B1**
(45) Veröffentlichungstag und Bekanntmachung des Hinweises auf die Patenterteilung: **13.11.2002**
(21) Anmeldenummer: 98947385.5
(22) Anmeldetag: 05.08.1998
(51) Int. Cl.: B29C 49/22, B65D 1/02, B26F 1/00, B26F 1/14

(54) **VERFAHREN ZUR HERSTELLUNG EINES BEHÄLTERS SOWIE BEHÄLTER MIT DRUCKAUSGLEICHSÖFFNUNGEN**
METHOD FOR PRODUCING A CONTAINER AND CONTAINER WITH PRESSURE EQUALISATION OPENINGS
PROCEDE POUR LA FABRICATION D'UN RECIPIENT, AINSI QUE RECIPIENT POURVU D'ORIFICES D'EGALISATION DE PRESSION

(30) Priorität: 30.08.1997 DE 19737964
(43) Veröffentlichungstag der Anmeldung: 14.06.2000
(73) Patentinhaber: GAPLAST GmbH, D-82442 Altenau (DE)
(72) Erfinder: KNEER, Roland, D-82490 Farchant (DE)
(74) Vertreter: Flosdorff, Jürgen, Dr.
(86) Internationale Anmeldenummer: DE9802254
(87) Internationale Veröffentlichungsnummer: WO99011451

(56) Entgegenhaltungen:
- EP-A- 0 013 626
- EP-A- 0 103 343
- EP-A- 0 182 094
- EP-A- 0 759 399
- WO-A-94/26498
- DE-A- 3 321 091
- JP-A- 6 345 069
- US-A- 3 957 386
- US-A- 5 407 629

## Beschreibung

Die Erfindung betrifft ein Verfahren zur Herstellung eines Behälters bestehend aus einem im wesentlichen steifen Außenbehälter und einem leicht verformbaren Innenbeutel aus jeweils verschiedenartigen, keine Schweißverbindung miteinander eingehenden thermoplastischen Kunststoffen, mit einer Behälteröffnung und wenigstens einer Wandöffnung in dem Außenbehälter, durch die ein Druckausgleich in dem Bereich zwischen dem Innenbeutel und dem Außenbehälter erfolgt, wobei ein aus wenigstens zwei Schläuchen bestehender Vorformling coextrudiert und zwischen den geöffneten Hälften einer Blasform angeordnet wird und die Blasform geschlossen wird, wenn der Vorformling die zur Herstellung des Behälters erforderliche Länge hat, wobei im Bodenbereich des herzustellenden Behälters ein nach außen vorstehender Steg aus verschweißtem Material des Außenbehälters ausgebildet wird, in dem die verschweißte Bodennaht des Innenbeutels eingeklemmt und in axialer Richtung gehalten ist, und der Vorformling durch ein Druckmedium bis zur Anlage an der Wandung der Blasform aufgeblasen und aus der Blasform entnommen wird. Die Erfindung betrifft ferner derartige Behälter mit wenigstens einer Druckausgleichsöffnung.

Ein Verfahren der betrachteten Art ist in der DE 41 39 555 C2 offenbart. Dabei wird die geschlossene, wenigstens teilweise verschweißte Bodennaht des Außenbehälters durch besondere Formgebung des bodenseitigen Quetschbereichs der Blasform ausgebildet, wobei hier sowohl das Überschußmaterial abgequetscht als auch Material des Außenbehälters beidseitig zu einem im Querschnitt etwa drachenförmigen Steg zusammengeführt wird, aus dem sich die verschweißte Bodennaht des Innenbehälters infolge des Staudrucks in dem den Steg ausbildenden Hohlraum in Richtung des Behälterinnenraums ein wenig zurückzieht, so daß das Material des Außenbehälters über einen Teilbereich des Steges miteinander verschweißt wird. In dem darüber liegenden Bereich ist die Schweißnaht des Innenbeutels eingeklemmt. Der vorstehende Steg am Boden des Außenbehälteres kann auch eine andere Querschnittsform, beispielsweise eine gewölbte Form haben.

Zur Ausbildung der verschweißten Bodennaht des Außenbehälters und zum Einklemmen der bodenseitigen Schweißnaht des Innenbeutels wird ausdrücklich auf die Offenbarung der DE 41 39 555 C2 verwiesen.

An der Behälteröffnung des Behälters der betrachteten Art kann eine Pumpe angebracht sein, mit der der Behälterinhalt, der in den Innenbeutel aufgenommen ist, ausgebracht werden kann. Bei dem Behälter kann es sich aber auch um einen Quetschbehälter handeln, bei dem der Außenbehälter zum Ausbringen des Behälterinhalts von Hand zusammengedrückt wird, um dann wieder in seine Ausgangsform zurückzukehren.

Bei dem aus der DE 41 39 555 C2 bekannten Behälter erfolgt der Druckausgleich, der durch die mit der Abgabe des Behälterinhalts verbundene Volumenverringerung des Innenbeutels erforderlich wird, durch unverschweißte Schulternähte des Außenbehälters, die dadurch ausgebildet werden, daß der coextrudierte Rohling einen größeren Durchmesser hat als der Halsbereich der Blasform, so daß der Rohling im Schulterbereich und am Hals des herzustellenden Behälters beim Schließen der Blasform zur Beseitigung des Überschußmaterials abgequetscht wird. Dies geschieht ohne Ausbildung eines außen vorstehenden Stegs wie bei der Bodennaht, so daß beim glatten Abquetschvorgang im Quetschbereich des Schulterabschnitts sowie des Halsabschnitts Material des Innenbeutels zwischen dem hierdurch beabstandeten Material des Außenbehälters verbleibt, so daß das letztere nicht miteinander verschweißt werden kann, da sich hier das Material des Innenbeutels nicht zurückzieht. Demnach bildet sich hier eine geschlossene Schweißnaht am Innenbeutel aus, durch die die Dichtigkeit des Innenbeutels gewährleistet ist, und durch die beidseitig offenen Schulternähte des Außenbehälters kann Luft aus der umgebenden Atmosphäre zum Druckausgleich eintreten.

Diese Ausbildung hat den Nachteil, daß der Behälter von den offenen Schulternähten des Außenbehälters an aus zwei im wesentlichen lose aneinanderliegenden Halbschalen besteht. Wenn der Behälter mit einer Pumpe ausgerüstet wird und diese Pumpe mit einer leichten Schräglage auf die beiden Hals-Hälften aufgesetzt wird, können sich die beiden Halbschalen ein wenig gegeneinander verschieben, wodurch sich am oberen Rand ein Absatz bildet, durch den der Behälter undicht wird, da auch eine dort vorgesehene Gummieinlage die entstandene Unebenheit nicht ausgleichen kann. Außerdem können auf die bekannte Weise nur Behälter mit Schulterabschnitten mit den offenen Druckausgleichsnähten versehen werden, während bei sogenannten Weithalsgefäßen, die keine Schulterabschnitte haben, auf diese Weise keine Druckausgleichsöffnungen ausgebildet werden können.

Die EP-A-0 759 399 offenbart ein Verfahren gemäß dem Oberbegriff des Patentanspruchs 1. Die Druckschrift schlägt vor, aus der Wand des Außenbehälters mittels eines scharfen kreisförmigen Schneidwerkzeugs ein Loch auszustanzen, in dem dieses Schneidwerkzeug durch die Wand des Außenbehälters gedrückt wird. Hierbei besteht die Gefahr, daß der Innenbeutel beschädigt wird.

Der vorliegenden Erfindung liegt die Aufgabe zugrunde, ein Verfahren anzugeben, mit dem bei Behältern der betrachteten Art Druckausgleichsöffnungen in der Wand des Außenbehälters auf andere Weise als durch unverschweißte Schulternähte hergestellt werden können, ohne daß bei dem Behälter hierdurch Dichtigkeitsprobleme entstehen.

Außerdem soll ein Behälter angegeben werden, der wenigstens eine Druckausgleichsöffnung in seinem Außenbehälter enthält, ohne daß die genannten Nachteile auftreten.

Diese Aufgaben werden durch die Merkmale der Patentansprüche 1 und 12 gelöst.

Vorteilhafte Weiterbildungen der Erfindung sind in den abhängigen Ansprüchen gekennzeichnet.

Gemäß der vorliegenden Erfindung wird die wenigstens eine Wandöffnung des Außenbehälters im Anschluß an den Blasvorgang dadurch ausgebildet, daß von der Wand des Außenbehälters ein bevorzugt konvexer Wandabschnitt derart weggeschnitten wird, daß ein Loch in der Außenwand entsteht. Dies bedeutet, daß die Außenwand, an der der sehr dünne, flexible Innenbeutel anliegt, zumindest in einem sehr kleinen Bereich vollständig weggeschnitten wird, ohne daß hierbei der Innenbeutel verletzt wird. Dies ist deshalb überraschend, weil das Schneidwerkzeug, das den Wandabschnitt des Außenbehälters wegschneidet, bei seinem Schneidvorgang auch auf den Innenbeutel auftrifft, was sich notwenigerweise schon daraus ergibt, daß zur Ausbildung des Lochs in dem Außenbehälter eine gewisse Wandfläche, die unter anderem von der Größe des Behälters und der Anzahl der Wandöffnungen abhängt, vollständig weggeschnitten sein muß. Außerdem sind Toleranzen in der Wandstärke des Außenbehälters, die beispielsweise 1 bis 1,5 mm dick sein kann, unvermeidlich, so daß die Schnittiefe in der Praxis so festgelegt werden muß, daß gewährleistet ist, daß durch den Schneidvorgang tatsächlich ein durch den Außenbehälter hindurchführendes Loch entsteht.

Obwohl das scharfe Schneidwerkzeug auf den in aller Regel sehr dünnen Innenbeutel trifft -dessen Wandstärke beispielsweise 0,1 bis 0,25 mm beträgt- wird dieser Innenbeutel durch das Schneidwerkzeug nicht beschädigt, wenn dieses in einem sehr flachen Winkel auf den Innenbeutel auftrifft. Da in dem Augenblick, in dem die Wand des Außenbehälters völlig durchgetrennt ist, Luft in den Zwischenraum zwischen den Außenbehälter und den Innenbeutel eintritt, drückt das Schneidwerkzeug den flexiblen Innenbeutel nach innen zurück, ohne diesen in einer die Dichtigkeit beeinträchtigenden Weise zu beschädigen. Von dem Innenbeutel wird kein Wandabschnitt weggeschnitten, da -wie erwähnt- der Innenbeutel von dem Schneidwerkzeug weggedrückt wird, während das Schneidwerkzeug den Schneidvorgang an dem Außenbehälter fortsetzt.

Auf diese Weise können praktisch an beliebiger Stelle des Behälters Wandöffnungen an dem Außenbehälter ausgebildet werden, wobei der Schneidvorgang jeweils bevorzugt in einer Richtung erfolgt, in der der Außenbehälter nach außen gewölbt ist. Dies ist z.B. bei einer kreiszylinderischen Umfangswand eines Behälters der Fall, in die ein oder mehrere Wandöffnungen bevorzugt in der Weise geschnitten werden, daß der oder die Schneidvorgänge im weesntlichen in Umfangsrichtung erfolgen, entweder geradlinig, so daß -querschnittlich betrachtet- entlang einer Sekante ein Kreissegment weggeschnitten wird, oder aber die Schneidbewegung kann auch kreisförmig in die Umfangswand hinein erfolgen.

Die Wandöffnungen können aber natürlich auch in den meist gekrümmten Übergangsbereich der Umfangswand eines Behälters zu dessen Boden oder Schulterbereich eingeschnitten werden, wobei wegen der zweiachsigen Krümmung dieser Bereiche der Schneidvorgang in beliebiger Richtung erfolgen kann.

Damit können die Wandöffnungen praktisch an beliebiger Stelle des Außenbehälters ausgebildet werden, wobei es lediglich schwierig sein dürfte, die Wandöffnung in einem ebenen Bereich herzustellen, obwohl dies mit einem entsprechend angepaßten Schneidwerkzeug auch möglich sein dürfte und deshalb im Rahmen der Erfindung liegt.

Obwohl der Schneidvorgang in der Weise erfolgen kann, daß ein Wandabschnitt in mehreren Spänen -bei jeweils zunehmender Schnittiefe- weggeschnitten wird, ist besonders bevorzugt, daß der Wandabschnitt als ein einziger Span weggeschnitten wird. Dabei wird der Span von der Klinge des Schneidwerkzeugs von dem Außenbehälter zwangsläufig abgehoben, wodurch bei vollständiger Durchdringung der Wand des Außenbehälters eine vorauseilende Spreizung erfolgt, d.h. in den Bereich des sich ausbildenden Lochs kann schlagartig Luft zwischen den Außenbehälter und den anliegenden Innenbeutel eintreten, wodurch sich der Innenbeutel beim Auftreffen des Schneidmessers sofort von dem Außenbehälter lösen und nach innen ausweichen kann. Durch das Wegschneiden des Wandabschnitts als ein Span wird dazu beigetragen, daß der Innenbeutel durch das Schneidwerkzeug nicht verletzt wird.

Dabei liegt es aber im Rahmen der Erfindung, daß z.B. durch ein rotierendes Schneidwerkzeug zunächst beispielsweise ein oder zwei äußere Späne weggeschnitten werden können, woraufhin dann der das Loch ausbildende innere Span folgt. Dies kann z.B. dann zweckmäßig sein, wenn ein großer Behälter eine beträchtliche Wandstärke hat oder wenn ein relativ hartes Material für den Außenbehälter verwendet wird.

Nach einem weiteren Vorschlag der Erfindung sollte zum Wegschneiden des Wandabschnitts ein Messer verwendet werden, das an der beim Schnitt dem Innenbeutel zugewandten Außenseite eine schräge Flanke aufweist. Diese schräge Flanke muß nicht geradlinie verlaufen, sondern kann auch beispielsweise konvex gerundet sein. Diese schräge Flanke trägt ebenfalls dazu bei, daß der Innenbeutel nicht von dem Messer ergriffen und verletzt wird, sondern statt dessen nach innen ausweicht.

Außerdem trägt die schräge Flanke zur Spreizung des bereits weggeschnittenen Teils des Spans von der verbleibenden Außenwand bei, wodurch beim vollständigen Durchtritt durch die Wand des Außenbehälters der sofortige Lufteintritt erheblich gefördert wird.

Der geeignete Winkel der schrägen Außenflanke des Messers hängt von verschiedenen Faktoren ab, beispielsweise von der Wandstärke des Außenbehälters, vom Verlauf der Kontur des Außenbehälters im Bereich der Ausbildung der Wandöffnung sowie von dem verwendeten Material.

Vorzugsweise hat das Messer querschnittlich im Bereich der Schneide im wesentlichen eine Dachform, d.h. beidseitig der Schneide je eine schräge Flanke.

Weiter wird mit Vorteil vorgeschlagen, daß die Wandöffnung oder die Wandöffnungen dadurch ausgebildet werden, daß eine entsprechende Anzahl von Wandabschnitten mit einem rotierenden Rohrmesser weggeschnitten wird, das in einer Richtung vorgeschoben wird, in der der Außenbehälter nach außen gewölbt ist. Dabei schließt der Begriff "gewölbt" natürlich auch ein, daß der Behälter eine eckige Form haben kann.

Das rotierende Rohrmesser wird bevorzugt linear vorgeschoben, während es um seine Längsachse rotiert, wobei es aber auch durch eine geeignete Einrichtung auf einer Kreisbogenform vorgerückt werden kann.

Alternativ hierzu kann der Wandabschnitt bzw. können die Wandabschnitte auch von einem Hohlmesser weggeschnitten werden, das bevorzugt eine radiale Schnittbewegung ausführt, obwohl auch eine lineare Schnittbewegung möglich ist.

Die Erfindung ist nicht auf die Verwendung dieser Messer beschränkt.

Das erfindungsgemäße Verfahren sieht demnach vor, daß wenigstens ein Wandabschnitt durch ein im flachen Winkel auftreffendes Schneidwerkzeug so weggeschnitten wird, daß in der Wand des Außenbehälters ein Loch entsteht. In der Ansicht hat dieser weggeschnittene Wandabschnitt -je nach Außenkontur des zugehörigen Bereichs des Außenbehälters- meist die Form einer Ellipse oder eine Linsenform. Das auf diese Weise entstehende Loch kann beispielsweise die Größe von einigen Quadratmillimeter, beispielsweise 1 bis 3 mm² haben, wobei die gesamte Schnittfläche erheblich größer ist. Die Abmessungen hängen natürlich vorzugsweise von der Größe des jeweiligen Behälters ab.

Überraschend bei dem erfindungsgemäßen Verfahren ist, daß das Schneidwerkzeug bei seinem Schneidvorgang in aller Regel auf den Innenbeutel auftrifft, der hierbei jedoch unverletzt bleibt, da er von dem Schneidwerkzeug nicht ergriffen, sondern zurückgedrückt wird, so daß bei dem Innenbeutel keine Dichtigkeitsprobleme auftreten.

Der erfindungsgemäße Behälter kann demnach praktisch an allen Bereichen des Außenbehälters mit einer, zwei oder falls gewünscht mehr Druckausgleichsöffnungen versehen sein, wobei nach außen gewölbte Wandabschnitte des Außenbehälters flach weggeschnitten sind, so daß sich etwa elliptische oder linsenförmige Schnittflächen ergeben, in deren Zentrum sich jeweils ein durch den Außenbehälter führendes Loch befindet. Auch wenn der Innenbeutel nur eine minimale Wandstärke hat, wird er bei dem Schneidvorgang nicht beschädigt, sondern einfach nach innen zurückgedrückt, da insbesondere bei der spanförmigen Abhebung des Wandabschnitts vor dem Auftreffen des Schneidwerkzeugs auf den Innenbeutel Luft zwischen Außenbehälter und Innenbeutel eingetreten ist, die das Zurückweichen des Innenbeutels ermöglicht.

Weitere Einzelheiten der Erfindung ergeben sich aus der nachfolgenden Beschreibung sowie anhand der Zeichnung. Dabei zeigen:
- Fig. 1A: die Herstellung einer Druckausgleichsöffnung mittels eines rotierenden Rohrmessers;
- Fig. 1B: eine Aufsicht auf den Behälter gemäß Fig. 1A;
- Fig. 1C: eine vergrößerte Darstellung des Schneidbereichs des Rohrmessers;
- Fig. 2A: die Herstellung einer Druckausgleichsöffnung mittels eines radial bewegten Hohlmessers;
- Fig. 2B: eine Aufsicht auf die Anordnung gemäß Fig. 2A und
- Fig. 2C: eine vergrößerte Darstellung des Schneidbereichs des Rohrmessers.

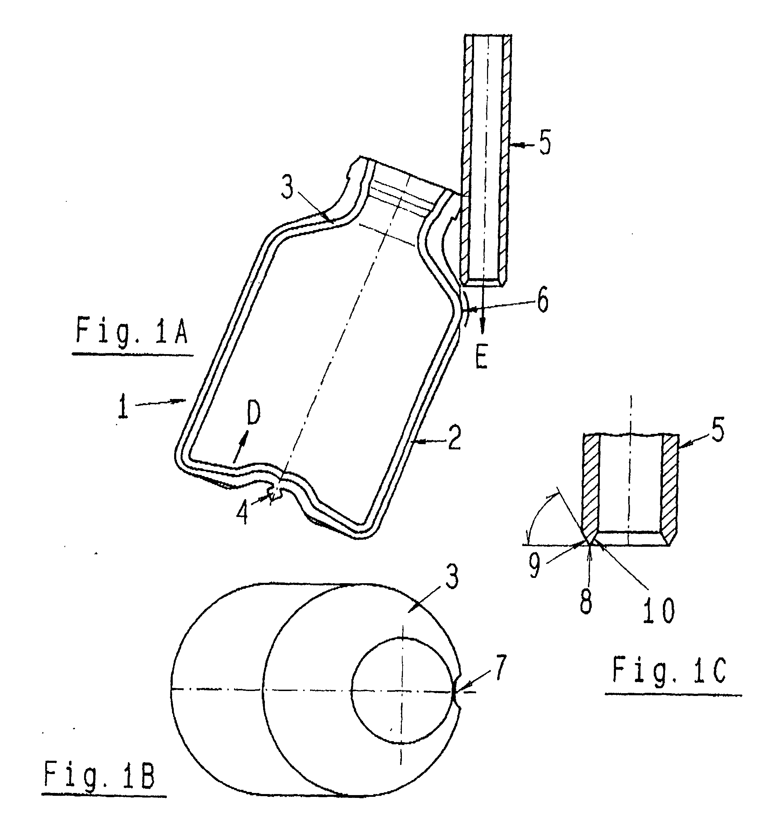

Fig. 1A zeigt auf weitgehend schematische Weise ein erfindungsgemäßes Verfahren zur Herstellung der Druckausgleichsöffnungen an einem Behälter 1, der aus einem starren Außenbehälter 2, beispielsweise aus Polypropylen und einem weichen Innenbeutel 3, beispielsweise aus Polyethylen besteht. In der Blasform ist der aus den entsprechenden zwei Schichten koextrudierte schlauchförmige Rohling am Boden in der Weise abgequetscht worden, daß ein nach außen vorstehender, querschnittlich etwa drachenförmiger Steg 4 gebildet wird, in den die verschweißte Bodennaht des Innenbeutels 3 eingeklemmt ist. Da sich bei diesem Vorgang das Material des Innenbeutels ein wenig in Richtung des Pfeils D in Figur 1A von der Trennstelle zurückgezogen hat, ist in dem unteren Bereich des Stegs 4 auch eine geschlossene Schweißnaht des Außenbehälters 2 entstanden, so daß der Boden des Behälters 1 dicht verschlossen ist.

Zur Ausbildung von Druckausgleichsöffnungen an dem Behälter 1 wird ein Rohrmesser 5 in Richtung des Pfeils E vorgeschoben, wobei es um seine Längsachse rotiert. Das Rohrmesser 5 schneidet dabei einen gewölbten Abschnitt 6 im übergangsbereich der Schulter des Behälters zu dessen zylindrischer Umfangswand weg.

Während des Schneidvorgangs trifft das Rohrmesser 5 in einem sehr flachen Winkel auf den Innenbeutel 3 und drückt diesen dabei nach innen weg, so daß der Innenbeutel 3 hierdurch nicht beschädigt wird.

Fig. 1B läßt die am Außenbehälter 2 ausgebildete Druckausgleichsöffnung 7 erkennen.

Fig. 1C zeigt eine bevorzugte Ausführungsform des Rohrmessers 5, das an der Außenseite der Schneidspitze 8 eine schräge Flanke 9 aufweist, die bei der dargestellten Ausführungsform etwa einen Winkel von 45o mit der Längsachse des Rohrmessers 5 einschließt, ohne daß die Erfindung hierauf beschränkt ist. Auch an der Innenseite hat das Rohrmesser eine schräge Flanke 10, so daß es insgesamt querschnittlich eine Dachform hat.

Die schräge Flanke 9 trägt dazu bei, daß der Innenbeutel 3 beim Schneidvorgang unbeschädigt bleibt.

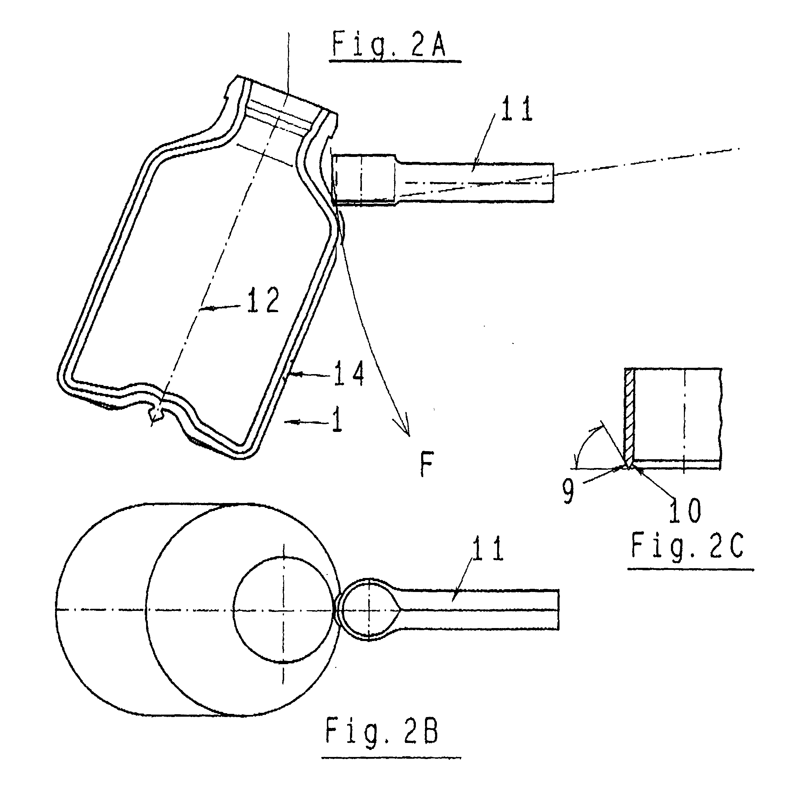

Bei dem in Fig. 2A ebenfalls weitgehend schematisch dargestellten erfindungsgemäßen Verfahren zur Ausbildung einer Druckausgleichsöffnung wird ein Hohlmesser 11 eingesetzt, das von einer geeigneten Betätigungseinrichtung so bewegt wird, daß es eine radiale, wiederum sehr flache Schnittbewegung (Pfeil F) ausführt. Das Hohlmesser 11 könnte aber auch eine geradlinige Schneidbewegung ausführen, die beispielsweise senkrecht zur Längsachse 12 des Behälters 1 verläuft und aus der zylindrischen Umfangswand 13 einen Abschnitt 14 wegschneidet, der in Fig. 2A gestrichelt angedeutet ist.

Fig. 2C deutet in einer vergrößerten Darstellung wiederum an, daß der Schneidbereich des verwendeten Messers eine äußere schräge Flanke 9 sowie eine innere schräge Flanke 10 hat. Die Flanke 9 trägt auf hier dazu bei, daß durch Einwirkung einer Spreizkraft frühzeitig und wirkungsvoll Luft in den Bereich zwischen den Außenbehälter 2 und den Innenbeutel 3 eintreten kann, um das Ablösen des Innenbeutels 3 von dem Außenbehälter 2 zu ermöglichen, wobei die Flanke 9 zusätzlich verhindert, daß der Innenbeutel 3 durch die Schneidspitze ergriffen wird.

Die Flanke 9 kann beispielsweise auch eine konvexe Querschnittsform haben.

## Patentansprüche

1. Verfahren zur Herstellung eines Behälters (1) bestehend aus einem im wesentlichen steifen Außenbehälter (2) und einem leicht verformbaren Innenbeutel (3) aus jeweils verschiedenartigen, keine Schweißverbindung miteinander eingehenden thermoplastischen Kunststoffen und einer Behälteröffnung und wenigstens einer Wandöffnung (7) in dem Außenbehälter (2), durch die ein Druckausgleich in dem Bereich zwischen dem Innenbeutel (3) und dem Außenbehälter (2) erfolgt, wobei ein aus wenigstens zwei Schläuchen bestehender Vorformling koextrudiert und zwischen den geöffneten Hälften einer Blasform angeordnet wird, die Blasform geschlossen wird, wenn der Vorformling die zur Herstellung des Behälters (1) erforderliche Länge hat, wobei überschußmaterial im Bodenbereich des herzustellenden Behälters abgequetscht und ein nach außen vorstehender Steg (4) aus verschweißtem Material des Außenbehälters (2) ausgebildet wird, in dem die verschweißte Bodennaht des Innenbeutels (3) eingeklemmt und in axialer Richtung gehalten ist und der Vorformling durch ein Druckmedium zur Anlage an die Wandung der Blasform aufgeblasen und aus der Blasform entnommen wird,
**dadurch gekennzeichnet**
**daß** die wenigstens eine Wandöffnung (7) dadurch ausgebildet wird, daß ein Schneidwerkzeug in einem flachen Winkel auf die Wand des Außenbehälters auftrifft und in flacher Schnittbewegung soviel Wandmaterial wegschneidet, daß ein Loch in der Außenwand entsteht.

2. Verfahren nach Anspruch 1,
**dadurch gekennzeichnet, daß** die Wandöffnung durch Wegschneiden von bevorzugt einem einzigen Span von der Außenwand ausgebildet wird.

3. Verfahren nach Anspruch 1 oder 2,
**dadurch gekennzeichnet, daß** der Wandabschnitt (6) in einer Richtung weggeschnitten wird, in der die Außenkontur des Außenbehälters (2) gekrümmt verläuft.

4. Verfahren nach einem der Ansprüche 1 bis 3,
**dadurch gekennzeichnet, daß** der weggeschnittene Wandabschnitt (6) in der Aufsicht im wesentlichen die Form einer Ellipse oder einer Linse hat.

5. Verfahren nach einem der Ansprüche 1 bis 4,
**dadurch gekennzeichnet, daß** der Wandabschnitt (6) mit einem Messer (5, 11) weggeschnitten wird, das an der beim Schnitt dem Innenbeutel (3) zugewandten Außenseite eine schräge Flanke (9) aufweist.

6. Verfahren nach Anspruch 5,
**dadurch gekennzeichnet, daß** das verwendete Messer querschnittlich im Bereich der Schneide im wesentlichen eine Dachform hat.

7. Verfahren nach einem der Ansprüche 1 bis 6,
**dadurch gekennzeichnet, daß** der Wandabschnitt (6) mit einem rotierenden Rohrmesser (5) weggeschnitten wird, das in einer Richtung vorgeschoben wird, in der der Außenbehälter (3) nach außen gewölbt ist.

8. Verfahren nach einem der Ansprüche 1 bis 6,
dadurch gekenzeichnet, daß der Wandabschnitt (6) von einem Hohlmesser (11) weggeschnitten wird, das eine kreisförmige Schnittbewegung ausführt.

9. Verfahren nach einem der Ansprüche 1 bis 8,
**dadurch gekennzeichnet, daß** der Wandabschnitt (6) von der vorzugsweise zylindrischen Umfangswand des Außenbehälters (3) im wesentlichen in Umfangsrichtung weggeschnitten wird.

10. Verfahren nach einem der Ansprüche 1 bis 8,
**dadurch gekennzeichnet, daß** der Wandabschnitt (6) von dem gekrümmten übergangsbereich der vorzugsweise zylindrischen Umfangswand zum Boden oder zur Schulter des Behälters weggeschnitten wird.

11. Verfahren nach einem der Ansprüche 1 bis 10,
**dadurch gekennzeichnet, daß** zwei oder mehr Wandabschnitte (6) weggeschnitten werden.

12. Behälter, bestehend aus einem im wesentlichen steifen Außenbehälter und einem leicht verformbaren Innenbeutel aus jeweils verschiedenartigen, keine Schweißverbindung miteinander eingehenden thermoplastischen Kunststoffen mit einer Behälteröffnung und wenigstens einer Wandöffnung in dem Außenbehälter, durch die ein Druckausgleich in dem Bereich zwischen dem Innenbeutel und dem Außenbehälter erfolgt, wobei der Außenbehälter einen geschlossenen Boden hat, in dem die Schweißnaht des Innenbeutels eingeklemmt ist,
**dadurch gekennzeichnet, daß** als wenigstens eine Wandöffnung ein Wandabschnitt (6) des Außenbehälters (2) in einer flachen Schnittbewegung, bei der ein Schneidwerkzeug in einem flachen Winkel auf die Wand auftrifft, weggeschnitten ist, wodurch eine etwa elliptische oder linsenförmige Schnittfläche mit einem durch die Wand des Außenbehälters (3) führenden Loch ausgebildet ist.

13. Behälter nach Anspruch 12,
**dadurch gekennzeichnet, daß** zwei oder mehr gewölbte Wandabschnitte des Außenbehälters (3) weggeschnitten sind.

## Claims

1. Method for producing a container (1) consisting of a substantially rigid outer container (2) and an easily deformable inner bag (3) each of different thermoplastic plastics materials, which do not form a welded joint with one another, and a container opening and at least one wall opening (7) in the outer container (2), through which pressure equalisation takes place in the region between the inner bag (3) and the outer container (2), wherein a parison, which consists of at least two flexible tubes, is coextruded and disposed between the open halves of a blow mould, and the blow mould is closed when the parison is of the length required for producing the container (1), wherein excess material in the bottom region of the container which is to be produced is squeezed out and an outward protruding web (4) of welded material of the outer container (2) is formed, in which the welded bottom seam of the inner bag (3) is clamped and held in the axial direction, and the parison is inflated by a pressure medium so as to lie against the wall of the blow mould and is removed from the blow mould,
**characterised in**
**that** the at least one wall opening (7) is formed by a cutting tool meeting the wall of the outer container at a shallow angle and cutting away in a shallow cutting movement so much material that a hole is produced in the outer wall.

2. Method according to Claim 1,
**characterised in that** the wall opening is formed by preferably cutting a single shaving away from the outer wall.

3. Method according to Claim 1 or 2,
**characterised in that** the wall portion (6) is cut away in a direction in which the outer contour of the outer container (2) extends in a curved fashion.

4. Method according to any one of Claims 1 to 3,
**characterised in that** the wall portion (6) which is cut away substantially has the shape of an ellipse or a lens in plan view.

5. Method according to any one of Claims 1 to 4,
**characterised in that** the wall portion (6) is cut away with a knife (5, 11) comprising an oblique flank (9) on the outer side which faces the inner bag (3) during cutting.

6. Method according to Claim 5,
**characterised in that** the knife which is used has a substantially roof-shaped cross section in the region of the cutting edge.

7. Method according to any one of Claims 1 to 6,
**characterised in that** the wall portion (6) is cut away with a rotating tubular knife (5) which is advanced in a direction in which the outer container (3) is arched outward.

8. Method according to any one of Claims 1 to 6,
**characterised in that** the wall portion (6) is cut away by a hollow knife (11) which executes a circular cutting movement.

9. Method according to any one of Claims 1 to 8,
**characterised in that** the wall portion (6) is cut away from the preferably cylindrical circumferential wall of the outer container (3) substantially in the circumferential direction.

10. Method according to any one of Claims 1 to 8,
**characterised in that** the wall portion (6) is cut away from the curved transition region between the preferably cylindrical circumferential wall and the bottom or the shoulder of the container.

11. Method according to any one of Claims 1 to 10,
**characterised in that** two or more wall portions (6) are cut away.

12. Container, consisting of a substantially rigid outer container and an easily deformable inner bag each of different thermoplastic plastics materials, which do not form a welded joint with one another, with a container opening and at least one wall opening in the outer container, through which pressure equalisation takes place in the region between the inner bag and the outer container, wherein the outer container has a closed bottom, in which the weld seam of the inner bag is clamped,
**characterised in that** a wall portion (6) of the outer container (2) is cut away as at least one wall opening in a shallow cutting movement, in which a cutting tool meets the wall at a shallow angle, thereby forming an approximately elliptic or lenticular cut face with a hole leading through the wall of the outer container (3).

13. Container according to Claim 12,
**characterised in that** two or more arched wall portions of the outer container (3) are cut away.

## Revendications

1. Procédé pour la fabrication d'un récipient (1) se composant d'un récipient extérieur (2) sensiblement rigide et d'une poche intérieure (3) facilement déformable en matériaux synthétiques thermoplastiques respectivement de genres différents ne présentant pas de liaisons soudées entre eux, ainsi que d'un orifice de récipient et d'au moins un orifice de paroi (7) dans le récipient extérieur (2), par lequel a lieu une égalisation de pression dans la zone entre la poche intérieure (3) et le récipient extérieur (2), une préforme se composant d'au moins deux tuyaux souples étant coextrudée et disposée entre les moitiés ouvertes d'un moule de soufflage, le moule de soufflage étant fermé lorsque la préforme a la longueur requise pour la réalisation du récipient (1), le matériau en excédent dans la zone de fond du récipient à réaliser étant dégagé par écrasement et une nervure (4) saillant vers l'extérieur étant réalisée en matériau soudé du récipient extérieur (2), le cordon de fond soudé de la poche intérieure (3) étant coincé et maintenu en direction axiale dans cette nervure et la préforme étant gonflée à l'aide d'un fluide sous pression pour s'appuyer contre la paroi du moule de soufflage puis enlevée du moule de soufflage, **caractérisé en ce que** l'au moins un orifice de paroi (7) est formé par le fait qu'un outil de coupe attaque la paroi du récipient extérieur avec un angle plat en découpant dans un mouvement de coupe plat suffisamment de matériau de paroi pour qu'un trou soit pratiqué dans la paroi extérieure.

2. Procédé selon la revendication 1, **caractérisé en ce que** l'orifice de paroi est réalisé par la découpe de préférence d'une seule pièce dans la paroi extérieure.

3. Procédé selon la revendication 1 ou 2, **caractérisé en ce que** la section de paroi (6) est découpée dans une direction dans laquelle le contour externe du récipient extérieur (2) a une forme arrondie.

4. Procédé selon l'une des revendications 1 à 3, **caractérisé en ce que** dans une vue en plan la section de paroi découpée (6) a sensiblement la forme d'une ellipse ou d'une lentille.

5. Procédé selon l'une des revendications 1 à 4, **caractérisé en ce que** la section de paroi (6) est découpée avec un couteau (5, 11) qui, du côté externe dirigé pendant la découpe vers la poche intérieure (3), possède un flanc incliné (9).

6. Procédé selon la revendication 5, **caractérisé en ce que** dans la zone du tranchant la section du couteau utilisé a sensiblement la forme d'un toit.

7. Procédé selon l'une des revendications 1 à 6, **caractérisé en ce que** la section de paroi (6) est découpée avec un couteau tubulaire tournant (5), qui avance dans une direction dans laquelle le récipient extérieur (3) est bombé vers l'extérieur.

8. Procédé selon l'une des revendications 1 à 6, **caractérisé en ce que** la section de paroi (6) est découpée avec un couteau creux (11), qui effectue un mouvement de coupe circulaire.

9. Procédé selon l'une des revendications 1 à 8, **caractérisé en ce que** la section de paroi (6) est découpée sensiblement dans le sens circonférentiel de la paroi périphérique de préférence cylindrique du récipient extérieur (3).

10. Procédé selon l'une des revendications 1 à 8, **caractérisé en ce que** la section de paroi (6) est découpée de la zone arrondie de la paroi périphérique de préférence cylindrique assurant la transition avec le fond ou avec l'épaulement du récipient.

11. Procédé selon l'une des revendications 1 à 10, **caractérisé en ce que** deux ou plusieurs section(s) de paroi (6) est(sont) découpée(s).

12. Récipient se composant d'un récipient extérieur sensiblement rigide et d'une poche intérieure facilement déformable en matériaux synthétiques thermoplastiques respectivement de genre différent ne présentant pas de liaisons soudées entre eux, avec un orifice de récipient et au moins un orifice de paroi dans le récipient extérieur, par lequel a lieu une égalisation de pression dans la zone entre la poche intérieure et le récipient extérieur, le récipient extérieur ayant un fond fermé, dans lequel est coincé le cordon de soudure de la poche intérieure, **caractérisé en ce qu'**en tant qu'au moins un orifice de paroi, une section de paroi (6) du récipient extérieur (2) est découpée avec un mouvement de coupe plat, au cours duquel un outil de coupe attaque la paroi avec un angle plat, ce qui aboutit à une surface de découpe approximativement elliptique ou en forme de lentille avec un trou traversant la paroi du récipient extérieur (3).

13. Récipient selon la revendication 12, **caractérisé en ce que** deux ou davantage de sections de paroi arrondies du récipient extérieur (3) sont découpées.
